Europäisches Patentamt

European Patent Office

Office européen des brevets

(11) Numéro de publication: **0 509 911 B1**

(12) **FASCICULE DE BREVET EUROPEEN**

(45) Date de publication de fascicule du brevet: **19.07.95**

(21) Numéro de dépôt: **92401050.7**

(22) Date de dépôt: **15.04.92**

(51) Int. Cl.⁶: **F16F 15/03**, F16F 1/54,
F16F 7/10, F16C 39/06,
H02K 5/24, G05D 19/02

(54) **Amortisseur de vibrations hybride à vibrateur magnétique actif.**

(30) Priorité: **16.04.91 FR 9104656**

(43) Date de publication de la demande:
**21.10.92 Bulletin 92/43**

(45) Mention de la délivrance du brevet:
**19.07.95 Bulletin 95/29**

(84) Etats contractants désignés:
**CH DE GB IT LI SE**

(56) Documents cités:
**EP-A- 0 275 791        EP-A- 0 338 933
DE-B- 1 072 017        FR-A- 2 609 133
FR-A- 2 630 354        GB-A- 2 222 279
GB-A- 2 222 657**

**PATENT ABSTRACTS OF JAPAN vol. 13, no.
385 (M-864)(3733) 25 Août 1989 & JP-A-1 135
943**

(73) Titulaire: **SOCIETE DE MECANIOUE MAGNETI-
OUE S.A.
B.P. 2282- 2 rue des Champs
F-27950 Saint-Marcel (FR)**

(72) Inventeur: **Habermann, Helmut
63 rue de Bizy
F-27200 Vernon (FR)**

(74) Mandataire: **Thévenet, Jean-Bruno et al
Cabinet Beau de Loménie
158, rue de l'Université
F-75340 Paris Cédex 07 (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services
(3.10/3.09/3.3.3)

## Description

La présente invention concerne un amortisseur de vibrations hybride à vibrateur magnétique actif pour notamment des machines tournantes.

Dans de nombreux domaines il est souhaitable de limiter au maximum les vibrations transmises au sol, ou à la paroi externe d'une enceinte, telle que par exemple la coque d'un engin de transport maritime, à partir de sources de vibrations telles que notamment des machines tournantes, en particulier des turbines.

Il a été proposé, par exemple par le document de brevet FR-2 609 133 d'agir directement sur le rotor de la machine tournante sur laquelle, quelle que soit la qualité de l'équilibrage de ce rotor, un balourd, provenant du décalage existant entre l'axe d'inertie et l'axe des paliers, ne peut être totalement éliminé. Selon ce document, un anneau de compensation lié au bâti de la machine tournante et de relativement faible masse exerce sur le rotor de cette machine par l'intermédiaire d'un palier magnétique radial, une force tournante de compensation égale à la force centrifuge due au balourd et déphasée de 180° par rapport à cette dernière, contribuant ainsi à réduire les vibrations.

Il a été également proposé, par exemple par le document de brevet FR-2 630 354, d'agir non plus directement sur le rotor de la machine tournante mais sur le berceau de cette machine, lieu principal de transmission des vibrations. Selon ce document un corps extérieur creux solidaire par exemple du berceau d'une machine tournante exerce sur celui-ci, par l'intermédiaire d'un ensemble de paliers magnétiques actifs montés selon trois axes à l'intérieur de ce corps creux autour d'un corps sphérique interne, une force de réaction sur ce berceau, contribuant ainsi à réduire les vibrations.

Toutefois, du fait de la souplesse du berceau ou du stator de la machine tournante, ces dispositifs présentent l'inconvénient de nécessiter des calculs complexes pour obtenir un fonctionnement optimal, la détermination à chaque instant des paramètres liant capteurs et actionneurs nécessitant soit l'utilisation de moyens informatiques importants soit une recherche expérimentale très poussée.

La présente invention vise à assurer une réduction des vibrations transmises par des machines tournantes au sol ou à la plate-forme sur laquelle les machines sont installées.

L'invention vise plus particulièrement à réaliser un amortisseur de vibrations qui soit compact et puisse facilement être monté à la place des plots de suspension élastique classiques isolant du sol le berceau des machines tournantes.

Ces buts sont atteints grâce à un amortisseur de vibrations hybride à vibrateur magnétique actif notamment pour isoler du sol ou d'une plate-forme le bâti d'une machine tournante, caractérisé en ce qu'il comprend : une armature interposée entre des des première et deuxième structures viscoélastiques présentant une raideur et un coefficient d'amortissement identiques, pour former deux plots amortisseurs en série entre ledit bâti et le sol ou ladite plate-forme, un anneau métallique solidaire de ladite armature, présentant une face périphérique cylindrique externe disposée parallèlement à l'axe commun desdites première et deuxième structures viscoélastiques et une face supérieure disposée perpendiculairement à cet axe ; au moins trois éléments de palier magnétique actif radial à carcasse feuilletée en forme de U solidaires d'un corps cylindrique externe constituant une masse flottante autour de ladite armature et régulièrement répartis à la périphérie de l'anneau en étant disposés sans contact en regard d'une armature ferromagnétique radiale rapportée sur ladite face périphérique cylindrique externe dudit anneau ; au moins trois détecteurs radiaux de la position radiale de l'anneau régulièrement répartis en regard de la périphérie de l'anneau ; au moins trois éléments de palier magnétique actif axial à carcasse feuilletée en forme de U solidaires dudit corps cylindrique externe flottant et régulièrement répartis le long de ladite face supérieure dudit anneau en étant disposés sans contact en regard d'une armature ferromagnétique axiale rapportée sur ledit anneau ; au moins trois détecteurs axiaux de la position axiale de ladite face supérieure régulièrement répartis le long de l'anneau en regard de ladite face supérieure ; au moins un dispositif de détection de vibration, et des circuits d'asservissement de l'ensemble des éléments de palier magnétique radiaux et axiaux à partir du dispositif de détection des vibrations et de l'ensemble des détecteurs radiaux et axiaux pour créer sur le corps cylindrique externe de support des éléments de palier des forces de réaction omnidirectionnelles qui tendent à s'opposer aux forces des vibrations engendrées sur l'armature par la machine tournante.

De préférence, les éléments de palier magnétique actif axial sont disposés par rapport à l'anneau selon des positions angulaires décalées par rapport à celles des éléments de palier magnétique actif radial.

L'amortisseur peut comprendre huit éléments de palier magnétique actif radial régulièrement répartis à la périphérie de l'anneau en regard de ladite armature ferromagnétique radiale rapportée sur la face périphérique cylindrique de l'anneau.

Il peut aussi comprendre quatre éléments de palier magnétique actif radial régulièrement répartis à la périphérie de l'anneau en regard de ladite armature ferromagnétique radiale rapportée sur la face périphérique cylindrique de l'anneau.

L'amortisseur comprend avantageusement quatre détecteurs radiaux régulièrement répartis en regard de la périphérie de l'anneau.

Il peut encore comprendre quatre éléments de palier magnétique actif axial régulièrement répartis le long de ladite face supérieure dudit anneau et quatre détecteurs axiaux régulièrement répartis le long de l'anneau en regard de ladite face supérieure.

Avantageusement, les détecteurs radiaux et axiaux sont décalés angulairement par rapport aux éléments de palier actif respectivement radiaux et axiaux.

Selon une caractéristique particulière, le dispositif de détection de vibrations comprend un accéléromètre ou un capteur de vitesse disposé au voisinage de l'anneau sur l'armature dont les vibrations sont à commander.

Selon un mode particulier de réalisation, les éléments de palier magnétique actif radial sont situés au moins partiellement sous ladite armature ferromagnétique axiale.

Les circuits d'asservissement sont commandés de manière à fonctionner en boucle fermée pour définir un dispositif amortisseur créant sur l'anneau des forces de réaction s'opposant aux forces de vibrations détectées sur l'armature à stabiliser.

De tels asservissements sont particulièrements simples et présentent, de par la disposition particulière de l'amortisseur, l'intérêt d'être isolés, par la partie inférieure du plot de suspension, des perturbations en provenance d'autres machines tournantes et transmises par le sol, puisque ces perturbations sont atténuées par la deuxième structure viscoélastique. L'interchangeabilité avec les plots classiques existants est en outre un avantage supplémentaire de l'amortisseur de vibration selon l'invention.

D'autres caractéristiques et avantages de la présente invention ressortiront mieux de la description qui va suivre faite en référence aux dessins annexés, dans lesquels :

- la figure 1 est une vue en coupe des éléments actifs d'un amortisseur de vibrations selon l'invention destiné à être monté entre un bâti de machine et le sol ou une plate-forme de support,
- la figure 1A montre une partie de l'amortisseur de la figure 1 selon une variante de réalisation,
- la figure 2 est une vue selon A des figures 1 et 3, avec retrait partiel de l'anneau 12, du dispositif selon l'invention,
- la figure 3 est une vue en coupe des éléments de détection d'un amortisseur de vibrations selon la figure 1,

- la figure 4 est un schéma symbolique équivalent au dispositif selon l'invention de la figure 1.

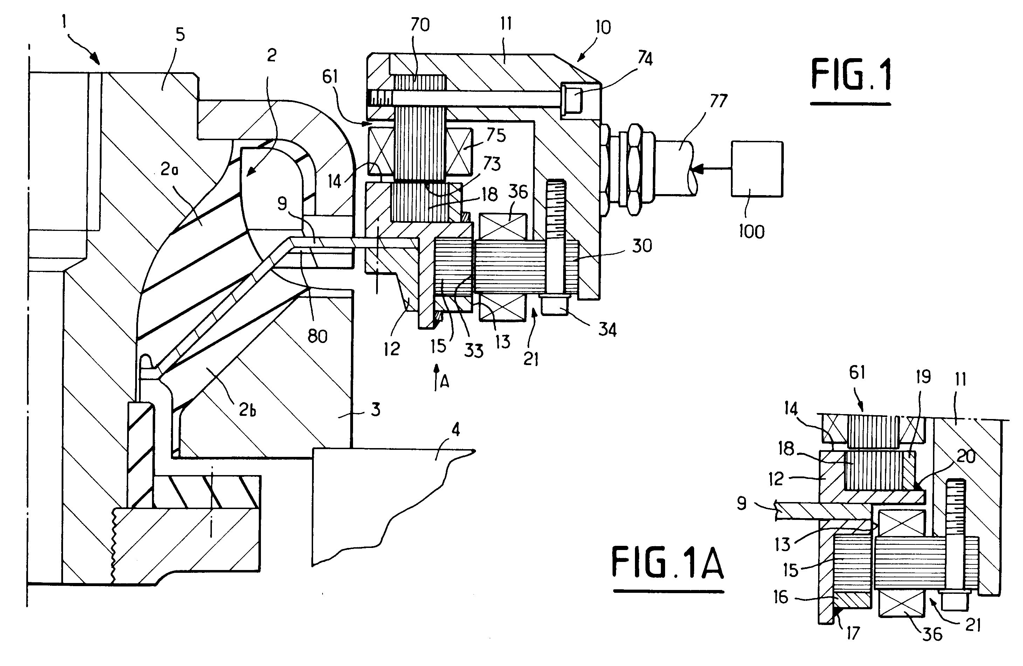

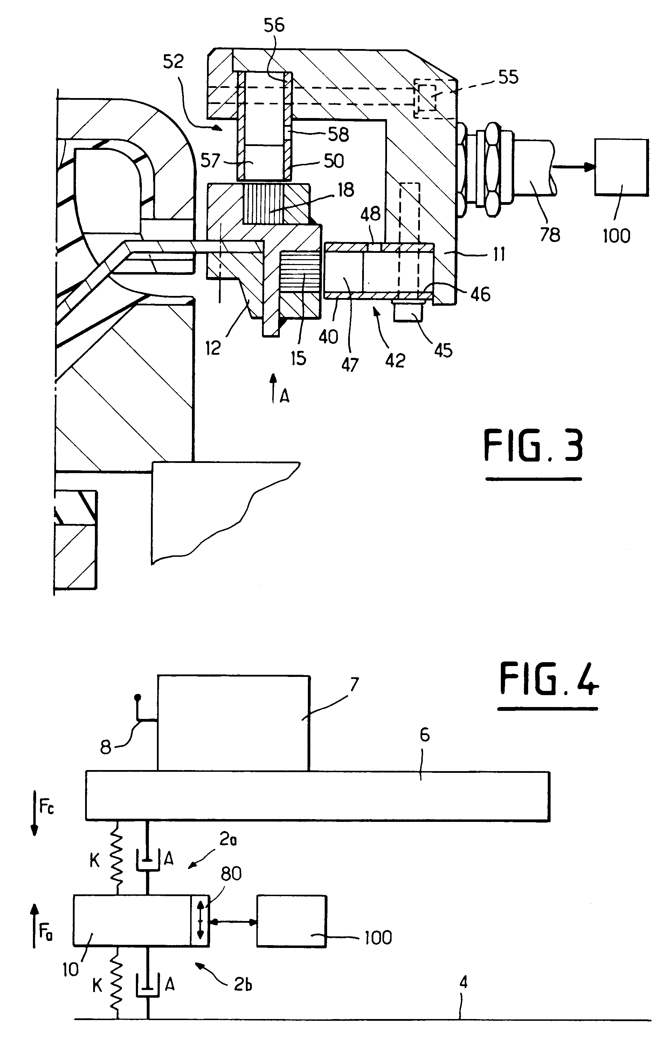

Il est fait référence à la figure 1 sur laquelle il est montré un amortisseur de vibrations hybride conforme à l'invention adapté pour être monté à la place d'un plot de suspension élastique classique. L'amortisseur est constitué principalement d'une structure viscoélastique 2 regroupant deux éléments de structure viscoélastique 2a, 2b et montée entre une première partie 3 fixée au sol ou à une plate-forme 4, notamment une coque d'engins de transport maritime et une seconde partie 5 fixée au berceau 6 de la machine tournante 7, dont on désire amortir ou compenser les vibrations créées notamment par le balourd 8 de son arbre tournant (voir figure 4). En l'absence de tout dispositif actif d'amortissement la force tournante engendrée sur le rotor de la machine tournante 7 est donc la force centrifuge Fc due au baloud de ce rotor qui est telle que :

$$Fc = e\Omega^2 M \qquad (1)$$

e est l'excentrement dû au balourd, c'est-à-dire la distance entre l'axe de rotation et l'axe d'inertie du rotor, $\Omega$ représente la vitesse de rotation, et M la masse de ce rotor.

Comme il est montré sur la figure 1, les deux parties 2a, 2b de la structure viscoélastique 2 sont rapportées sur une armature 9 circulaire supportant à sa périphérie un actionneur 10, l'ensemble constituant un amortisseur de vibrations à vibrateur magnétique actif.

L'armature 9 sépare ainsi la structure viscoélastique 2 du plot de suspension élastique classique 1 en deux parties 2a,2b identiques de manière à réaliser deux plots en série ayant chacun une raideur K double de la raideur d'un plot élastique classique. L'actionneur 10 comporte un ensemble d'éléments de palier magnétique actif montés sur un corps cylindrique externe 11 formant boîtier et capables d'exercer sur l'armature 9 des forces de compensation dans des sens opposés selon deux directions perpendiculaires. Un anneau métallique 12 solidaire de l'armature 9 présente une face périphérique cylindrique externe 13 et une face supérieure 14 disposée perpendiculairement à l'axe du plot de suspension élastique 1. L'anneau métallique 12 est réalisé en deux parties munies de brides non représentées, pour pouvoir être monté facilement sur l'armature 9.

Une première armature ferromagnétique 15 en matériau feuilleté, dite armature radiale, est disposée à la périphérie de l'anneau 12 et vient affleurer sur la face périphérique cylindrique externe 13, une joue latérale 16 retenue par un élément d'immobilisation 17 venant assurer l'ancrage de cette armature 15 dans l'anneau 12. Une seconde armature ferromagnétique 18, dite armature axiale, est disposée sur le dessus de l'anneau 12 et vient affleurer la face supérieure 14, une seconde joue 19 retenue par un second élément d'immobilisation 20 venant assurer l'ancrage de cette armature 18 dans l'anneau 12.

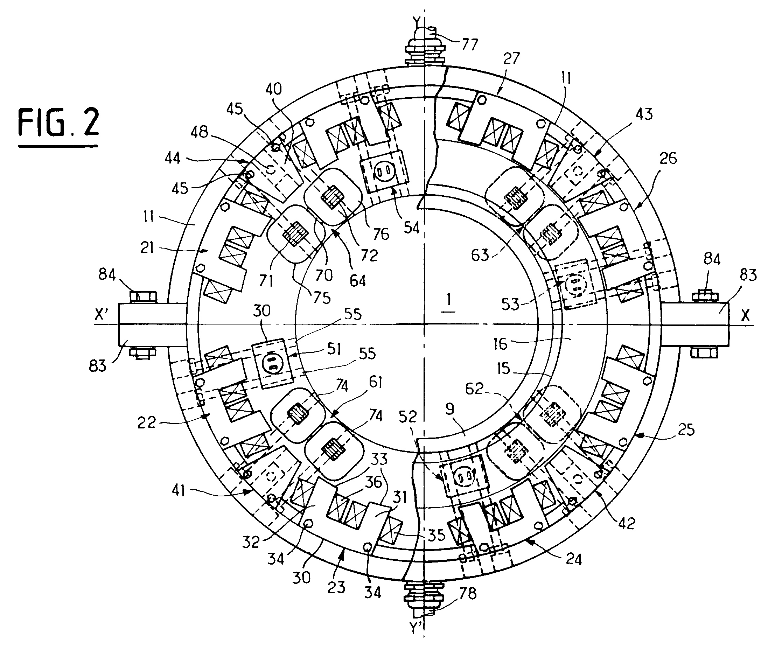

En fonctionnement normal, l'anneau 12 est disposé sans contact à l'intérieur du corps cylindrique externe 11 qui est constitué de deux demi-cylindres réunis l'un à l'autre au moyen de brides 83 réunies elles-mêmes par des boulons 84 et se trouve en regard d'un ensemble d'éléments qui constituent des éléments de stator de paliers magnétiques ou des détecteurs de position qui seront décrits plus précisément au regard de la figure 2.

Le stator comprend un ensemble de huit éléments de palier magnétique actif radial référencés 21 à 28, qui présentent chacun une carcasse feuilletée 30 en forme de U rapportée sur le corps cylindrique externe 11 et fixée à celui-ci par des boulons 34, chaque carcasse feuilletée 30 définissant deux branches polaires 31,32 autour desquelles sont disposés des enroulements 35,36 d'électroaimant. Les faces terminales 33 des pièces polaires 31,32 des carcasses 30 en forme de U sont placées en regard de l'armature annulaire périphérique 15 de l'anneau 12 de manière à définir un entrefer de faible épaisseur. Les huit éléments de palier magnétique actif radial 21 à 28 sont régulièrement répartis à la périphérie de l'anneau 12 et forment des couples d'éléments de palier diamétralement opposés. Toutefois, il serait également possible de n'utiliser qu'un ensemble de quatre éléments de palier magnétique actif radial disposés en croix selon deux directions perpendiculaires ou bien encore trois éléments de paliers magnétique actif radial régulièrement répartis à la périphérie de l'anneau 12.

Un pion d'orientation peut être utilisé lors du montage des paliers autour de l'anneau 12 pour positionner de façon précise les différents éléments constitutifs du dispositif amortisseur. En fonctionnement, le pion est retiré pour supprimer tout contact entre l'anneau 12 et les éléments solidaires du corps cylindrique externe flottant 11.

Quatre détecteurs radiaux 41 à 44 de la position radiale de l'anneau 12 sont régulièrement répartis en regard de la périphérie de l'anneau 12 et sont disposés dans des espaces libres ménagés entre les éléments de palier magnétique actif radial. On voit ainsi sur la figure 2, des détecteurs radiaux 41,42,43,44 qui sont disposés respectivement entre les couples d'éléments de palier magnétique radial voisin 22,23;24,25;26,27 et 28,21. Comme représenté sur les figures 2 et 3, chaque détecteur radial 41 à 44 comprend un corps 40 monté sur le corps cylindrique extérieur 11 par des boulons 45, et présente une cavité interne 46 dans laquelle est disposé l'organe de détection proprement dit 47 qui fait face à l'armature annulaire périphérique 15 de l'anneau 12. L'orifice 48 ménagé dans la paroi du corps 40 de détecteur radial permet le passage des fils électriques d'alimentation du détecteur.

Au dessus de l'anneau 12, un ensemble de quatre éléments de palier magnétique actif axial 61 à 64 coopèrent avec la face supérieure 14 de l'anneau 12. Chaque élément de palier magnétique actif axial 61 à 64 présente une structure tout à fait similaire à celle des éléments de palier magnétique actif radial 21 à 28, avec une carcasse feuilletée 70 en forme de U rapportée sur le corps cylindrique externe 11 et fixée à celui-ci par des boulons 74, chaque carcasse feuilletée 70 définissant deux branches polaires 71,72 autour desquelles sont disposés des enroulements d'électroaimants 75,76. Toutefois, dans le cas des éléments de palier magnétique actif axial, les faces terminales 73 des pièces polaires 71,72, qui sont disposées en regard de l'armature feuilletée 18 de l'anneau 12, à faible distance de celle-ci, sont planes de manière à définir un entrefer de faible épaisseur constante avec l'armature 18, tandis que les faces terminales 33 des pièces polaires 31,32 des carcasses feuilletées 30 des éléments de palier magnétique actif radial 21 à 28 sont incurvées pour définir avec la surface cylindrique de l'armature périphérique 15 de l'anneau 12 un entrefer d'épaisseur constante.

En regard de la face supérieure 14 de l'anneau 12, les stators des éléments de palier magnétique actif axial 61 à 64 sont disposés selon deux axes rectangulaires qui sont décalés par rapport aux axes des paires de stators d'éléments de palier magnétique actif radial diamétralement opposés, et peuvent correspondre aux deux directions selon lesquelles sont disposées les deux paires de détecteurs radiaux 41,43 et 42,44 diamétralement opposés par rapport à l'axe de l'anneau 12.

Quatre détecteurs axiaux 51 à 54 pour détecter la position axiale de la face supérieure 14 sont régulièrement répartis le long de l'anneau 12 en regard de cette face supérieure 14.

Comme représenté sur la figure 3, chaque détecteur axial peut présenter une structure semblable à celle d'un détecteur radial et comporte un corps 50 monté à l'aide de boulons 55 sur le corps cylindrique externe 11. L'élément actif 57 du détecteur est disposé dans une cavité 56 de façon à être en regard de la face supérieure de l'armature ferromagnétique 18 ancrée dans l'anneau 12. L'orifice 58 ménagé dans la paroi du corps de détecteur 50 permet le passage des fils d'alimentation du détecteur axial. Comme représenté sur la figure 2, les détecteurs axiaux 51 à 54 sont décalés angulairement par rapport aux éléments de palier magnétique actif axial 61 à 64, afin d'éviter que les détecteurs soient soumis à des perturbations parasites dues au courant circulant dans les enroulements d'électroaimants des éléments de palier. Il peut être noté que comme pour les éléments de palier magnétique actif radial, il est possible de n'utiliser que trois éléments de palier magnétique actif axial régulièrement répartis le long de la face supérieure 14 de l'anneau 12. Trois détecteurs radiaux régulièrement répartis en regard de la périphérie de cet anneau 12 et trois détecteurs axiaux également régulièrement répartis le long de l'anneau 12 en regard de sa face supérieure 14 seront alors seulement nécessaires pour permettre un fonctionnement analogue au dispositif décrit plus précisément en regard de la figure 2.

Les câbles d'alimentation des enroulements d'électroaimants de palier magnétique actif et les fils de liaison entre les circuits d'asservissement extérieur et les différents détecteurs de position pénétrent à l'intérieur du corps cylindrique externe 11 par respectivement des sorties de câbles 77 et 78.

Le dispositif amortisseur selon l'invention comprend essentiellement deux corps concentriques, à savoir l'anneau 12 et le corps cylindrique externe 11, dont les positions relatives sont asservies pour créer sur l'armature 9 sur laquelle est fixée l'anneau 12 des forces de réaction visant à réduire les vibrations auxquelles est soumise cette armature 9 (rôle d'amortisseur du dispositif).

Dans ce cas, les circuits d'asservissement 100 sont commandés de manière à fonctionner en boucle fermée pour définir un dispositif amortisseur créant sur l'anneau 12 des forces de réaction s'opposant aux forces de vibrations détectées sur l'armature à stabiliser 9.

Un dispositif de détection de vibrations qui peut comprendre par exemple un dispositif accélérométrique 80 selon trois directions est disposé sur l'armature.

Comme cela a déjà été indiqué, la position de l'anneau 12 par rapport au corps cylindrique externe 11 est asservie à l'aide des éléments de palier magnétique 21 à 28 et 61 à 64 qui sont alimentés par les lignes 77 à partir des circuits d'asservissement 100 commandés par les informations délivrées par le dispositif 80 de détection de vibrations, de telle sorte que les déplacements du corps cylindrique externe 11 provoquent des forces de réaction sur l'anneau 12 et par suite sur l'armature 9 afin de réduire et même annuler les forces de vibration auxquelles est soumise l'armature 9. Les circuits d'asservissement 100 comportent ainsi des circuits d'entrée recevant les signaux du dispositif de détection 80 qui effectuent une simple intégration si le dispositif 80 de détection de vibrations est du type vélocimétrique, ou une double intégration si le dispositif 80 de détection de vibrations est du type accélérométrique. Le reste de la chaîne d'asservissement des éléments de palier 21 à 28 et 61 à 64 peut ensuite être réalisé de façon classique.

Afin d'éviter que l'anneau 12 ne vienne en contact avec les stators des éléments de palier 21 à 28 et 61 à 64 et afin de positionner cet anneau 12 dans une position bien centrée par rapport au corps cylindrique externe 11 lorsque l'amortisseur est en service et en l'absence de vibrations extérieures, les détecteurs de position 41 à 44 et 51 à 54 par exemple de type inductif ou capacitif, disposés au voisinage de chacun des éléments de palier 21 à 28 et 61 à 64, délivrent par les lignes 78 aux circuits d'asservissement 100 des informations concernant la position de l'anneau 12 par rapport aux divers éléments de palier magnétique 21 à 28 et 61 à 64. Les signaux délivrés par les détecteurs de position 41 à 44 et 51 à 54 sont ainsi pris en compte par les circuits d'asservissement 100 d'une part pour définir une position d'équilibre centrée en l'absence de vibrations à compenser et d'autre part pour limiter l'amplitude des mouvements de l'anneau 12 en cas de vibrations trop fortes.

La figure 4 montre de façon symbolique la compensation apportée par le dispositif amortisseur selon l'invention. Il a été montré qu'en l'absence de ce dispositif, la force Fc créée sur le rotor de la machine 7 du fait du balourd 8 est donnée par l'expression (1). Avec ce dispositif amortisseur, il peut être également montré que la force à compenser au niveau de l'amortisseur est donnée par la relation suivante :

$$Fa = e \, (K^2 + A^2 \, \Omega^2)^{1/2} \qquad (2)$$

soit encore en considérant $K << A \, \Omega$; K étant la raideur d'un demi plot :

$$Fa = e \, A \, \Omega \qquad (3)$$

où e est l'excentrement dû au balourd, $\Omega$ la vitesse de rotation du rotor et A le coefficient d'amortissement d'un demi-plot de suspension élastique 2a ou 2b.

A titre d'exemple, il est considéré une machine et son berceau d'une masse totale de 5000kg. Le balourd est supposé sans masse et la vitesse de rotation du rotor étant de 628 rad/sec (f = 100Hz). La force Fc au niveau du berceau est alors selon (1) de près de 2000 N, s'il est considéré un excentrement de 1 micromètre.

Par ailleurs, en adoptant pour fréquence propre d'un plot de suspension classique une valeur de 5Hz, la raideur et le coefficient d'amortissement de ce plot ressortent respectivement à 5N/$\mu$m et 0,08 N/$\mu$m sec et la force transmise au sol par ce plot de suspension classique sera alors de 50 N.

Chaque demi-plot ayant une raideur et un coefficient d'amortissement double, la force à compenser par l'actionneur Fa sera donc de 100N, moyennant quoi la force transmise au sol sera en définitive pratiquement nulle en tout cas inférieure à 1N dans le cas de la mise en oeuvre d'un amortisseur hybride conforme à l'invention à la place d'un plot amortisseur unique.

Diverses modifications et adjonctions peuvent être apportées aux modes de réalisation décrits sans sortir du cadre de l'invention.

Ainsi, l'amortisseur peut être rendu plus compact si l'on adopte une configuration conforme à la variante de la figure 1A, selon laquelle les éléments de palier magnétique actif radial 21 à 28 solidaires de la masse flottante sont engagés partiellement sous l'armature ferromagnétique axiale 18.

**Revendications**

1. Amortisseur de vibrations hybride à vibrateur magnétique actif notamment pour isoler du sol ou d'une plate-forme le bâti d'une machine tournante, caractérisé en ce qu'il comprend : une armature (9) interposée entre des première et deuxième structures viscoélastiques (2a,2b) présentant une raideur et un coefficient d'amortissement identiques, pour former deux plots amortisseurs en série entre ledit bâti et le sol ou ladite plate-forme, un anneau métallique (12) solidaire de ladite armature (9), présentant une face périphérique cylindrique externe (13) disposée parallèlement à l'axe commun desdites première et deuxième structures viscoélastiques (2a,2b) et une face supérieure (14) disposée perpendiculairement à cet axe ; au moins trois éléments de palier magnétique actif radial (21 à 28) à carcasse feuilletée en forme de U solidaires d'un corps cylindrique externe (11) constituant une masse flottante autour de ladite armature (9) et régulièrement répartis à la périphérie de l'anneau (12) en étant disposés sans contact en regard d'une armature ferromagnétique radiale (15) rapportée sur ladite face périphérique cylindrique externe (13) dudit anneau (12) ; au moins trois détecteurs radiaux (41 à 44) de la position radiale de l'anneau (12) régulièrement répartis en regard de la périphérie de l'anneau (12) ; au moins trois éléments de palier magnétique actif axial (61 à 64) à carcasse feuilletée en forme de U solidaires dudit corps cylindrique externe (11) flottant et régulièrement répartis le long de ladite face supérieure (14) dudit anneau (12) en étant disposés sans contact en regard d'une armature ferromagnétique axiale (18) rapportée sur ledit anneau (12) ; au moins trois détecteurs axiaux (51 à 54) de la position axiale de ladite face supérieure (14) régulièrement répartis le long de l'anneau (12) en regard de ladite face supérieure (14) ; au moins un dispositif (80) de détection de vibration, et des circuits d'asservissement (100) de l'ensemble des éléments de palier magnétique radiaux et axiaux (21 à 28 ; 61 à 64) à partir du dispositif (80) de détection des vibrations et de l'ensemble des détecteurs radiaux et axiaux (41 à 44 et 51 à 54) pour créer sur le corps cylindrique externe (11) de support des éléments de palier des forces de réaction omnidirectionnelles qui tendent à s'opposer aux forces des vibrations engendrées sur l'armature (9) par la machine tournante.

2. Amortisseur selon la revendication 1, caractérisé en ce que les éléments de palier magnétique actif axial (61 à 64) sont disposés par rapport à l'anneau (12) selon des positions angulaires décalées par rapport à celles des éléments de palier magnétique actif radial (21 à 28).

3. Amortisseur selon la revendication 1 ou la revendication 2, caractérisé en ce qu'il comprend huit éléments de palier magnétique actif radial (21 à 28) régulièrement répartis à la périphérie de l'anneau (12) en regard de ladite armature ferromagnétique radiale (15) rapportée sur la face périphérique cylindrique (13) de l'anneau (12).

4. Amortisseur selon la revendication 1 ou la revendication 2, caractérisé en ce qu'il comprend quatre éléments de palier magnétique actif radial (21 à 28) régulièrement répartis à la périphérie de l'anneau (12) en regard (12) de ladite armature ferromagnétique radiale (15) rapportée sur la face périphérique cylindrique (13) de l'anneau (12).

5. Amortisseur selon l'une quelconque des revendications 1 à 4, caractérisé en ce qu'il comprend quatre détecteurs radiaux (41 à 44) régulièrement répartis en regard de la périphérie de l'anneau (12).

6. Amortisseur selon l'une quelconque des revendications 1 à 5, caractérisé en ce qu'il comprend quatre éléments de palier magnétique actif axial (61 à 64) régulièrement répartis le long de ladite face supérieure (14) dudit anneau (12) et quatre détecteurs axiaux (51 à 54) régulièrement répartis le long de l'anneau (12) en regard de ladite face supérieure (14).

**7.** Amortisseur selon l'une quelconque des revendications 1 à 6, caractérisé en ce que les détecteurs radiaux (41 à 44) et axiaux (51 à 54) sont décalés angulairement par rapport aux éléments de palier actif respectivement radiaux (21 à 28) et axiaux (61 à 64).

**8.** Amortisseur selon l'une quelconque des revendications 1 à 7, caractérisé en ce que le dispositif (80) de détection de vibrations comprend un accéléromètre ou un capteur de vitesse disposé au voisinage de l'anneau (12) sur l'armature (9) dont les vibrations sont à commander.

**9.** Amortisseur selon l'une quelconque des revendications 1 à 8, caractérisé en ce que les circuits d'asservissement (100) sont commandés de manière à fonctionner en boucle fermée pour définir un dispositif amortisseur créant sur l'anneau (12) des forces de réaction s'opposant aux forces de vibrations détectées sur l'armature à stabiliser (9).

**10.** Amortisseur selon l'une quelconque des revendications 1 à 9, caractérisé en ce que les éléments de palier magnétique actif radial (21 à 28) sont situés au moins partiellement sous ladite armature ferromagnétique axiale (18).

**Claims**

**1.** Hybrid vibration damper with active magnetic vibrator especially for isolating the bed of rotating machinery from the ground or from a platform, characterized in that it comprises: an armature (9) interposed between first and second viscoelastic structures (2a, 2b) exhibiting an identical stiffness and an identical damping coefficient, in order to form two damping mounts in series between the said bed and the ground or the said platform, a metallic ring (12) integral with the said armature (9), exhibiting an exterior cylindrical peripheral face (13) located parallel to the common axis of the said first and second viscoelastic structures (2a, 2b) and an upper face (14) located perpendicular to this axis; at least three radial active magnetic bearing elements (21 to 28) with a laminated U-shaped frame which are integral with an exterior cylindrical body (11) constituting a floating mass about the said armature (9) and evenly distributed at the periphery of the ring (12), being located without contact facing a radial ferromagnetic armature (15) attached to the said exterior cylindrical peripheral face (13) of the said ring (12); at least three radial detectors (41 to 44) for detecting the radial position of the ring (12), these being evenly distributed facing the periphery of the ring (12); at least three axial active magnetic bearing elements (61 to 64) with a laminated U-shaped frame which are integral with the said floating exterior cylindrical body (11) and evenly distributed along the said upper face (14) of the said ring (12), being located without contact facing an axial ferromagnetic armature (18) attached to the said ring (12); at least three axial detectors (51 to 54) for detecting the axial position of the said upper face (14), these being evenly distributed along the ring (12) facing the said upper face (14); at least one vibration-detecting device (80), and circuits (100) for automatically controlling all of the radial and axial magnetic bearing elements (21 to 28; 61 to 64) from the vibration-detecting device (80), and for automatically controlling all of the radial and axial detectors (41 to 44 and 51 to 54) in order to create, on the exterior cylindrical body (11) for supporting the bearing elements, omnidirectional reaction forces which tend to oppose the vibration forces generated on the armature (9) by the rotating machinery.

**2.** Damper according to Claim 1, characterized in that the axial active magnetic bearing elements (61 to 64) are located relative to the ring (12) in angular positions which are offset relative to those of the radial active magnetic bearing elements (21 to 28).

**3.** Damper according to Claim 1 or Claim 2, characterized in that it comprises eight radial active magnetic bearing elements (21 to 28) which are evenly distributed at the periphery of the ring (12) facing the said radial ferromagnetic armature (15) attached to the cylindrical peripheral face (13) of the ring (12).

**4.** Damper according to Claim 1 or Claim 2, characterized in that it comprises four radial active magnetic bearing elements (21 to 28) which are evenly distributed at the periphery of the ring (12) facing (12) the said radial ferromagnetic armature (15) attached to the cylindrical peripheral face (13) of the ring (12).

**5.** Damper according to any one of Claims 1 to 4, characterized in that it comprises four radial detectors (41 to 44) evenly distributed facing the periphery of the ring (12).

**6.** Damper according to any one of Claims 1 to 5, characterized in that it comprises four axial active magnetic bearing elements (61 to 64) which are evenly distributed along the said upper face (14) of the said ring (12), and four axial detectors (51 to 54) evenly distributed along the ring (12) facing the said upper face (14).

7. Damper according to any one of Claims 1 to 6, characterized in that the radial detectors (41 to 44) and axial detectors (51 to 54) are angularly offset relative to the radial active bearing elements (21 to 28) and axial active bearing elements (61 to 64) respectively.

8. Damper according to any one of Claims 1 to 7, characterized in that the vibration-detecting device (80) comprises an accelerometer or a speed sensor located in the vicinity of the ring (12) on the armature (9) whose vibrations are to be controlled.

9. Damper according to any one of Claims 1 to 8, characterized in that the automatic-control circuits (100) are controlled so that they operate in closed-loop mode in order to define a damper device creating, on the ring (12), reaction forces which oppose the vibration forces detected on the armature (9) to be stabilized.

10. Damper according to any one of Claims 1 to 9, characterized in that the radial active magnetic bearing elements (21 to 28) are situated at least partially under the said axial ferromagnetic armature (18).

**Patentansprüche**

1. Hybrid-Schwingungsdämpfungsvorrichtung mit aktivem magnetischen Schwingungserzeuger, insbesondere zum Isolieren des Rahmens einer rotierenden Maschine vom Boden oder einer Trägerbühne,
dadurch **gekennzeichnet,** daß sie umfaßt: eine Bewehrung (9), die zwischen einer ersten und einer zweiten viskoelastischen Struktur (2a, 2b) mit gleichen Steifigkeiten und Dämpfungskoeffizienten angeordnet ist, um zwei Dämpfungskörper in Reihe zwischen dem Rahmen und dem Boden oder der Trägerbühne zu bilden, einen mit der Bewehrung (9) fest verbundenen Metallring (12), der eine zylindrische äußere Umfangsfläche (13), die parallel zur gemeinsamen Achse der ersten und zweiten viskoelastischen Struktur (2a, 2b) angeordnet ist, und eine Oberseite (14) aufweist, die senkrecht zu dieser Achse angeordnet ist; wenigstens drei radialen aktiven Magnetlagerelementen (21 - 28) mit U-förmigem geblechtem Kern, die mit einem externen zylindrischen Körper (11) fest verbunden sind, der eine um die Bewehrung (9) schwebende Masse bildet, und die am Umfang des Rings (12) regelmäßig verteilt und berührungslos einer radialen ferromagnetischen Bewehrung (15) zugewandt angeordnet sind, die an die an die äußere zylindrische Umfangsfläche (13) des Rings (12) angesetzt ist; wenigstens drei Radialdetektoren (41 - 44) zur Erfassung der radialen Position des Rings (12), die dem Umfang des Rings (12) zugewandt regelmäßig verteilt sind; wenigstens drei axialen aktiven Magnetlagerelementen (61 - 64) mit geblechtem U-förmigem Kern, die mit dem schwebenden externen zylindrischen Körper (11) fest verbunden und regelmäßig an der Oberseite (14) des Rings (12) verteilt und berührungslos einer an den Ring (12) angesetzten axialen ferromagnetischen Bewehrung (18) zugewandt angeordnet sind; wenigstens drei Axialdetektoren (51 - 54) zur Erfassung der axialen Position der Oberseite (14), die entlang des Rings (12) der Oberseite (14) zugewandt regelmäßig verteilt sind; wenigstens einer Schwingungserfassungsvorrichtung (80) und Steuerschaltungen (100) zum Steuern des Systems von radialen und axialen Magnetlagerelementen (21 - 28; 61 - 64) anhand der Schwingungserfassungsvorrichtung (80) und des Systems von Radial- und Axialdetektoren (41 - 44 und 51 - 54), um am externen zylindrischen Körper (11), der die Lagerelemente trägt, Reaktionskräfte in alle Richtungen zu erzeugen, die den durch die rotierende Maschine an der Bewehrung (9) erzeugten Schwingungskräften entgegenwirken.

2. Dämpfungsvorrichtung nach Anspruch 1, dadurch gekennzeichnet, daß die axialen aktiven Magnetlagerelemente (61 - 64) bezogen auf den Ring (12) in Winkelpositionen angeordnet sind, die gegen jene der radialen aktiven Magnetlagerelemente (21 - 28) versetzt sind.

3. Dämpfungsvorrichtung nach Anspruch 1 oder 2, dadurch gekennzeichnet, daß sie acht radiale aktive Magnetlagerelemente (21 - 28) umfaßt, die der an die zylindrische Umfangsfläche (13) des Rings (12) angesetzten radialen ferromagnetischen Bewehrung (15) zugewandt regelmäßig am Umfang des Rings (12) verteilt sind.

4. Dämpfungsvorrichtung nach Anspruch 1 oder 2, dadurch gekennzeichnet, daß sie vier radiale aktive Magnetlagerelemente (21-28) umfaßt, die der an die zylindrische Umfangsfläche (13) des Rings (12) angesetzten radialen ferromagnetischen Bewehrung (15) zugewandt regelmäßig am Umfang des Rings (12) verteilt sind.

5. Dämpfungsvorrichtung nach einem der Ansprüche 1 bis 4,
dadurch gekennzeichnet, daß
sie vier dem Umfang des Rings (12) zugewandt regelmäßig verteilte Radialdetektoren (41 - 44) umfaßt.

6. Dämpfungsvorrichtung nach einem der Ansprüche 1 bis 5,
dadurch gekennzeichnet, daß
sie vier regelmäßig entlang der Oberseite (14) des Rings (12) gleichmäßig verteilte axiale aktive Magnetlagerelemente (61 - 64) und vier der Oberseite (14) zugewandt regelmäßig entlang des Rings (12) verteilte Axialdetektoren (51 - 54) umfaßt.

7. Dämpfungsvorrichtung nach einem der Ansprüche 1 bis 6,
dadurch gekennzeichnet, daß
die Radialdetektoren (41 - 44) und die Axialdetektoren (51 - 54) gegen die radialen aktiven Magnetlagerelemente (21 - 28) bzw. die axialen aktiven Magnetlagerelemente (61 - 64) winkelversetzt sind.

8. Dämpfungsvorrichtung nach einem der Ansprüche 1 bis 7,
dadurch gekennzeichnet, daß
die Schwingungserfassungsvorrichtung (80) eine Beschleunigungsmeßeinrichtung oder einen Geschwindigkeitsmeßaufnehmer umfaßt, der in der Nähe des Rings (12) an der Bewehrung (9) angeordnet ist, deren Schwingungen zu steuern sind.

9. Dämpfungsvorrichtung nach einem der Ansprüche 1 bis 8,
dadurch gekennzeichnet, daß
die Steuerschaltungen (100) als geschlossener Regelkreis betrieben werden, um eine Dämpfungsvorrichtung zu definieren, die am Ring (12) Reaktionskräfte erzeugt, die den an der zu stabilisierenden Bewehrung (9) erfaßten Schwingungskräften entgegengesetzt sind.

10. Dämpfungsvorrichtung nach einem der Ansprüche 1 bis 9,
dadurch gekennzeichnet, daß
die radialen aktiven Magnetlagerelemente (21 - 28) wenigstens teilweise unter der axialen ferromagnetischen Bewehrung (18) angeordnet sind.

FIG.1

FIG.1A

FIG. 2

**FIG. 3**

**FIG. 4**